# EUROPEAN PATENT SPECIFICATION

(11) **EP 4 154 277 B1**
(45) Date of publication and mention of the grant of the patent: **22.04.2026**
(21) Application number: 21752610.2
(22) Date of filing: 14.05.2021
(51) Int. Cl.: G21C 19/46, G21G 1/00, G21G 4/08, B01J 39/04, C01G 43/025, C22B 3/28, B01D 15/36, B01J 39/05, C01F 15/00, C01G 43/00, C01G 43/01, C22B 60/02, C22B 3/38

(54) **METHODS AND SYSTEMS FOR SEPARATION OF THORIUM FROM URANIUM AND THEIR DECAY PRODUCTS**
VERFAHREN UND SYSTEME ZUR TRENNUNG VON THORIUM AUS URAN UND SEINEN ZERFALLSPRODUKTEN
PROCÉDÉS ET SYSTÈMES POUR LA SÉPARATION DU THORIUM DE L'URANIUM ET LEURS PRODUITS DE DÉSINTÉGRATION

(30) Priority: 18.05.2020 US 202016877156
(43) Date of publication of application: 29.03.2023
(73) Proprietor: Westinghouse Electric Company LLC, Cranberry Township, PA 16066 (US)
(72) Inventor: LYONS, John, Pittsburgh, Pennsylvania 15202 (US); LAHODA, Edward J., Edgewood, Pennsylvania 15218 (US); ICKES, Michael R., Pittsburgh, Pennsylvania 15235 (US); FLAHIVE, Daniel C., Granby, Connecticut 06035 (US); GIFT, JR., Frank C., Cranberry Township, Pennsylvania 16066 (US)
(74) Representative: Novagraaf Group
(86) International application number: PCT/US2021/032418
(87) International publication number: WO 2021/236435

(56) References cited:
- WO-A1-2019/115394
- GB-A- 991 418
- US-A1- 2003 127 395
- US-B2- 7 736 610
- HORWITZ E.PHILIP ET AL: "Separation and preconcentration of actinides by extraction chromatography using a supported liquid anion exchanger: application to the characterization of high-level nuclear waste solutions", ANALYTICA CHIMICA ACTA, vol. 310, no. 1, 1 June 1995 (1995-06-01), AMSTERDAM, NL, pages 63 - 78, XP093330074, ISSN: 0003-2670, DOI: 10.1016/0003-2670(95)00144-O

## Description

### CROSS-REFERENCE TO RELATED APPLICATION

This application claims the benefit of U.S. Non-Provisional Application Serial No. 16/877,156 filed May 18, 2020, entitled "METHODS AND SYSTEMS FOR SEPARATION OF THORIUM FROM URANIUM AND THEIR DECAY PRODUCTS".

### BACKGROUND

Nuclear power plants utilize nuclear fuel, which can degrade over time. The spent nuclear fuel has been typically viewed in some countries as a nuisance material, which may require particular precautions when handling. Additionally, recycling the spent nuclear fuel into new nuclear fuel or disposing of the spent nuclear fuel can be costly. These costs can be somewhat offset by utilizing some radioisotopes in the spent fuel for medical uses. The separations for medical uses, in particular, require high separation factors and good recovery of the valuable radioisotopes that may be present in very low concentrations and in very small amounts. There are challenges associated with the storage, transport, and/or recycling of spent nuclear fuel and the production of medical isotopes. U.S. Patent Publication No. 2003/0127395 A1 discloses a system for separating a solution of impurity-free daughter products from an associated parent load solution, with a pump, multi-port valves, a separation medium and a processor. WO 2019/115394 A1 discloses a method for preparing a powder comprising an intimate mixture of U₃O₈ particles and PuO₂ particles by preparing, by oxalic precipitations, an aqueous suspension of particles of uranium(IV) oxalate and an aqueous suspension of particles of plutonium(IV) oxalate; mixing the suspensions; separating the mixed suspension into an aqueous phase and a solid phase; and calcining the solid phase to convert the particles of uranium(IV) oxalate to particles of triuranium octoxide and the particles of plutonium(IV) oxalate to particles of plutonium(IV) dioxide. U.S. Patent No. 7 736 610 B2 discloses a product that includes ²²⁵Ac and less than about 1 µg of Fe per mCi of ²²⁵Ac, formed by providing a radioisotope mixture solution comprising at least one of ²³³U and ²²⁹Th, extracting the ²³³U or ²²⁹Th into an organic phase, continuously contacting the organic phase with an aqueous phase, extracting ²²⁵Ac into the aqueous phase, and purifying the ²²⁵Ac from the aqueous phase. GB Patent Application Publication No. 991 418 A discloses purifying U, Th and/or Pu by precipitation with a precipitating reagent from a solution of at least one of these metals containing an ammonium compound complexed with U, Th and Pu and an organic diluent.

### SUMMARY

The present disclosure provides a method for separation of thorium from uranium and their decay products. The method comprises combining a nuclear fuel feedstock comprising thorium and uranium with a first acid to form a first solution. The first acid is hydrochloric acid. In various examples, the nuclear fuel feedstock can comprise other components, such as, for example, plutonium, other generated transuranic elements such as americium, curium, or combinations thereof. The first solution is contacted with an ion exchange resin that is selective for uranium. The uranium is at least partially removed from the first solution by binding the uranium to the ion exchange resin thereby forming a second solution. The second solution is combined with oxalic acid to precipitate thorium from the second solution to form a precipitate. The precipitate comprises thorium. The precipitate is separated from the second solution.

The present disclosure also provides a system for performing the above method. The system comprises an extraction vessel and a separation vessel. The extraction vessel comprises an extraction inlet, the ion exchange resin, and an extraction outlet. The extraction inlet is configured to receive the nuclear fuel feedstock and the first acid. The extraction vessel is configured to form the first solution from the nuclear fuel feedstock and the first acid. The extraction vessel is configured to contact the first solution with the ion exchange resin to form the second solution. The extraction outlet is configured to transport the second solution out of the extraction vessel. The separation vessel comprises a separation inlet and a separation outlet. The separation inlet is in fluid communication with the extraction outlet and is configured to receive the second solution and the oxalic acid. The separation vessel is configured to combine the second solution and oxalic acid in order to precipitate the thorium in the second solution to form the precipitate.

It is understood that the inventions described in this specification are not limited to the examples summarized in this Summary. Various other aspects are described and exemplified herein.

### BRIEF DESCRIPTION OF THE DRAWING

The features and advantages of the examples, and the manner of attaining them, will become more apparent, and the examples will be better understood by reference to the following description of examples taken in conjunction with the accompanying drawing, wherein:
FIG. 1 is a schematic process diagram illustrating a method for separation of thorium from uranium and their decay products utilizing an ion exchange resin selective for uranium according to the present disclosure;
FIG. 2 is a schematic process diagram illustrating a method for separation of thorium from uranium and their decay products utilizing an ion exchange resin selective for thorium according to the present disclosure; and
FIG. 3 is a schematic diagram of a system for separation of thorium from uranium and their decay products according to the present disclosure.

Corresponding reference characters indicate corresponding parts throughout the several views. The exemplifications set out herein illustrate certain examples, in one form, and such exemplifications are not to be construed as limiting the scope of the examples in any manner.

### DETAILED DESCRIPTION

Certain exemplary aspects of the present disclosure will now be described to provide an overall understanding of the principles of the composition, function, manufacture, and use of the compositions and methods disclosed herein. An example or examples of these aspects are illustrated in the accompanying drawing. Those of ordinary skill in the art will understand that the compositions, articles, and methods specifically described herein and illustrated in the accompanying drawing are non-limiting exemplary aspects and that the scope of the various examples of the present invention is defined solely by the claims. The features illustrated or described in connection with one exemplary aspect may be combined with the features of other aspects. Such modifications and variations are intended to be included within the scope of the present invention.

Reference throughout the specification to "various examples," "some examples," "one example," "an example," or the like, means that a particular feature, structure, or characteristic described in connection with the example is included in an example. Thus, appearances of the phrases "in various examples," "in some examples," "in one example," "in an example," or the like, in places throughout the specification are not necessarily all referring to the same example. Furthermore, the particular features, structures, or characteristics may be combined in any suitable manner in an example or examples. Thus, the particular features, structures, or characteristics illustrated or described in connection with one example may be combined, in whole or in part, with the features, structures, or characteristics of another example or other examples without limitation. Such modifications and variations are intended to be included within the scope of the present examples.

Spent nuclear fuel is typically only recycled into new nuclear fuel or vitrified for final disposal. During recycling, usually uranium is the desired product and thorium is thought of as a waste stream. However, the present inventors believe that the thorium-233U nuclear fuel cycle has the potential to provide isotopes of interest to the medical community if an effective technology were to be developed to extract these valuable isotopes from spent nuclear fuel from the thorium-233U cycle. The present inventors believe being able to extend the uses for the thoritim-233U fuel cycle outside of power generation provides enhanced benefits for the use of the thorium-233U fuel cycle in nuclear power claims. Thus, the present disclosure provides methods and systems for separation of thorium from uranium and their decay products. The methods and systems according to the present disclosure can provide high purity medical grade thorium products, which may be used by the medical community or other industries. In various examples, the method and systems according to the present disclosure can provide high purity medical grade uranium products, which may be used by the medical community or other industries.

The present disclosure provides a method for separation of thorium from uranium and their decay products. The method can comprise combining a nuclear fuel feedstock comprising thorium and uranium and their decay products with a first acid to form a first solution. The first solution can be contacted with an ion exchange resin that is selective for uranium. The ions with a higher selectivity to the resin can be preferentially adsorbed to the ion exchange resin while the lower selectively species can pass through the ion exchange resin, hence separating the elemental species from one another. For example, uranium can be at least partially removed from the first solution by binding the uranium to the ion exchange resin thereby forming a second solution. In various examples, the second solution can be recycled for further exposure to additional ion exchange resin to improve the recovery of thorium. Once sufficient recovery has been achieved, the second solution can be combined with oxalic acid to precipitate the thorium. In various examples, if the second solution contains actinides and/or decay product impurities, a secondary solution comprising tributyl phosphate (TBP) and optionally a hydrocarbon, can be introduced to the second solution which can dissolve actinides and/or decay product impurities. Thereafter, dilute nitric acid can be introduced to a mixture of the second solution and secondary solution which can preferentially remove thorium from the mixture prior to exposure to oxalic acid (e.g., relative to other actinides and/or decay product impurities). Regardless of whether the secondary solution is used, the precipitate can be separated from the second solution. The precipitate can be processed into various products.

In various examples, the uranium can be eluted from the ion exchange resin and then combined with oxalic acid to precipitate thorium to form the precipitate. The precipitate can be processed into various products. In various examples, if the solution eluted from the ion exchange resin contains actinide or decay product impurities, a secondary solution comprising tributyl phosphate (TBP) can be introduced to the eluted solution which can dissolve actinides and/or decay product impurities. Thereafter, dilute nitric acid can be introduced to a mixture of the eluted solution and secondary solution which can preferentially remove thorium from the mixture prior to exposure to oxalic acid.

The ion exchange resin is selective for uranium (e.g., uranium (VI)) depending on the composition of the resin and the acid solution used for dissolution. Separation of actinides utilizing ion exchange resins is described in "SOLID- PHASE EXTRACTION FOR THE SEPARATION OF ACTINIDES FROM RADIOACTIVE WASTE" by S. Maischak and J. Fachinger, WM'01 Conference, February 25-March 1, 2001, Tucson Arizona. For example, the ion exchange resin and acid combination can be selective for uranium (e.g., comprise a greater affinity for binding with uranium (VI) than for thorium (IV)). An ion exchange resin that can be selective for uranium can comprise diamyl amylphosphonate, such as, for example, a UTEVA resin available from EIChroM Darien, Illinois. The UTEVA resin is described in EIChroM ideas Newsletter Volume 4, Issue No. 2, published June 1997 entitled "UTEVA Resin". The diamyl amylphosphonate can form nitrato complexes with actinide elements. An ion exchange resin that can be selective for uranium can comprise a quaternary ammonium salt, such as, for example, a TEVA resin available from TRISKEM International, France. The TEVA resin is described in the product sheet entitled TEVA resin by TRISKEM International available at "https://www.triskem-international.com/scripts/files/5c5855b887c4f4.23796223/PS_TEVA-Resin_EN_160927.pdf".

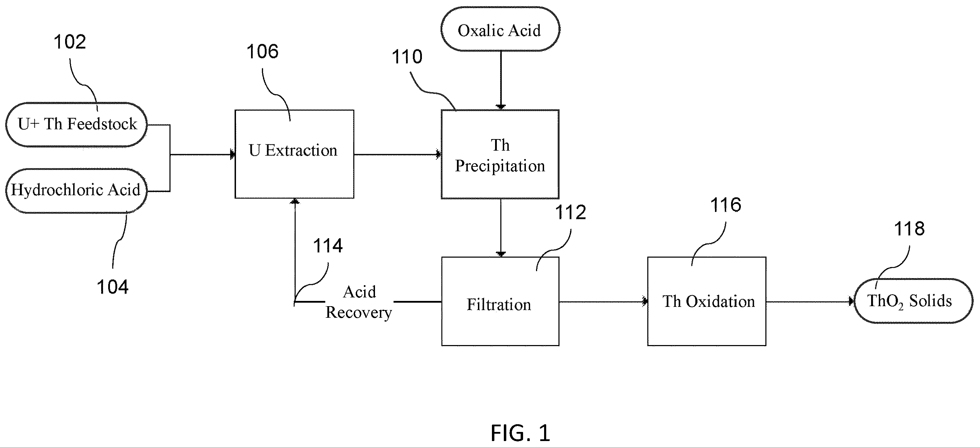

As illustrated in the process schematic of FIG. 1, a method for separation of thorium from uranium and their decay products utilizing an ion exchange resin that is selective for uranium is provided. As illustrated, a nuclear fuel feedstock comprising thorium and uranium is provided, 102 and a first acid comprising hydrochloric acid is provided, 104. In various examples, the nuclear fuel feedstock can also comprise plutonium, the decay products of plutonium, the decay products of uranium, or combinations thereof. In some examples, the nuclear fuel feedstock can comprise generated transuranic elements such as, for example, americium, curium, or a combination thereof, fission products, and other decay products. In various examples, it may be desirable to limit the amount of elements present in the nuclear fuel feedstock that have an atomic number of 95 or greater. For example, it may be desirable to limit the amount of americium present in the nuclear fuel feedstock. In certain examples, the nuclear fuel feedstock can be processed through an initial actinide separation (e.g., ion exchange process, solvent exchange process) prior to combining the nuclear fuel feedstock with the first acid.

As illustrated in FIG.1, the nuclear fuel feedstock can be combined with the first acid to form a first solution. The first solution can be contacted with an ion exchange resin to at least partially remove uranium from the first solution by binding the uranium to the ion exchange resin thereby forming a second solution with a reduced uranium content compared to the first solution, 106. The concentration of hydrochloric acid in the first solution can be kept at a sufficient level (e.g., in a range of 2 to 10 molar) to enhance binding of the uranium to the ion exchange resin and/or minimize binding of the thorium to the ion exchange resin.

The second solution is combined with oxalic acid to precipitate the thorium from the second solution to form a precipitate comprising thorium (e.g., thorium oxalate which can comprise a reduced solubility in acidic solutions), 110. Precipitation of uranium and/or thorium can proceed according to "PARAMETRIC STUDY ON CO-PRECIPITATION OF U/TH in MOX FUEL OF AHWR" by S.K. Tiwari, et al., International Thorium Energy Conference (ThEC 2015) October 12-15, 2015, Mumbai, India. The inventors of the present disclosure surprisingly discovered the combination of first removing uranium utilizing the ion exchange resin and then precipitating the thorium from the second solution could result in an unexpectedly enhanced purity and/or yield of products produced from the thorium precipitate. In various examples, the concentration of hydrochloric acid in the second solution can be kept at a sufficient level (e.g., greater than 5 Normal) to limit precipitation of uranium. In various other examples, the thorium in the second solution can be converted into a salt and precipitated out of the second solution by altering the pH of the second solution to reduce the solubility of the dissolved salt.

The oxalic acid can be added to the second solution at a substantially stoichiometric ratio to the thorium present in the second solution. For example, the oxalic acid may be added in a range of 0.001% to 1% by weight of the second solution. In various examples, keeping the oxalic acid at a substantially stoichiometric ratio to the thorium can limit excess oxalic acid present in the second solution and thus limits the present of the oxalic acid in the filtered solution. Therefore, the filtered solution can be recycled back into the process to be combined with the nuclear fuel feedstock, 114. The recycling can capture additional thorium, uranium, plutonium, or other decay products that remain in solution.

The thorium precipitate can be separated from the second solution by various processes, such as, for example, filtration to form a filtered thorium material and a filtered solution, 112. The filtered thorium material and optionally, ashless filter paper which can be used in the filtration process, may be oxidized by, for example, heating in an oxidizing environment (e.g., heating the filtered thorium material in a range of 200 degrees Celsius to 500 degrees Celsius in air), 116. The thorium dioxide can be processed to form a thorium product, 118.

In various examples, the ion exchange resin can also bind a portion of the thorium. In order to remove the bound thorium, the ion exchange resin can be washed with hydrochloric acid to elute preferentially the thorium for further separation at 110. The uranium may be recovered from the resin by elution with an acid or solvent or the uranium can be left adsorbed to the resin and/or immobilized such that is can be suitable for disposal.

In certain other examples, the ion exchange resin can be selective for thorium (e.g., comprise a greater affinity for binding with thorium (IV) than for uranium (VI)). An ion exchange resin that can be selective for thorium can be comprise a quaternary ammonium salt, such as, for example, a TEVA resin available from TRISKEM International, France. The TEVA resin can be selective for uranium by the use of hydrochloric acid as the first acid or selective for thorium by the use of nitric acid as the first acid.

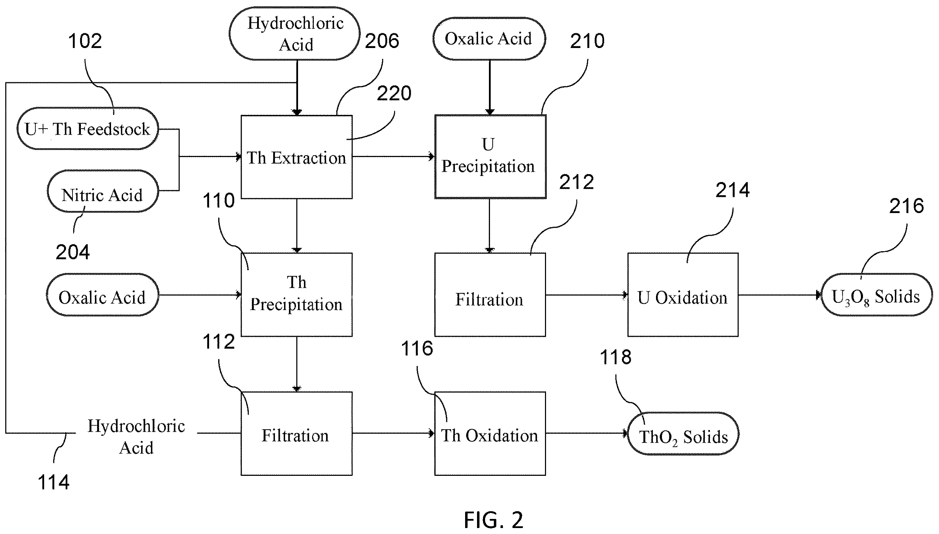

As illustrated in the process schematic of FIG. 2, a method for separation of thorium from uranium and their decay products utilizing an ion exchange resin that can be selective for thorium is provided. As illustrated, a nuclear fuel feedstock comprising thorium and uranium is provided, 102 and a first acid comprising nitric acid is provided, 204. The nuclear fuel feedstock can be combined with the first acid to form a first solution. The first solution can be contacted with an ion exchange resin to at least partially remove thorium from the first solution by binding the thorium to the ion exchange resin thereby forming a second solution with a reduced thorium content compared to the first solution, 206. The concentration of nitric acid in the first solution can be kept at a sufficient level (e.g., in a range of 2 to 6 molar) to enhance binding of the thorium to the ion exchange resin and/or minimize binding of the uranium to the ion exchange resin.

The second solution can be combined with oxalic acid to precipitate the uranium from the second solution to form a precipitate comprising uranium (e.g., uranium oxalate), 210. The inventors of the present disclosure surprisingly discovered the combination of first removing thorium utilizing the ion exchange resin and then precipitating the uranium from the first solution could result in an unexpectedly enhanced purity and/or yield of products produced from the uranium precipitate. In various examples, the concentration of nitric acid in the second solution can be kept at a sufficient level to limit precipitation of thorium.

The oxalic acid can be added to the second solution at a substantially stoichiometric ratio to the uranium present in the second solution. For example, the oxalic acid may be added in a range of 0.001% to 1% by weight of the second solution. In various examples, keeping the oxalic acid at a substantially stoichiometric ratio to the uranium can limit excess oxalic acid present in the second solution and thus limit the presence of the oxalic acid in the filtered solution. Therefore, the filtered solution can be recycled back into the process to be combined with the nuclear fuel feedstock if desired.

The uranium precipitate can be separated from the second solution by various processes, such as, for example, filtration to form a filtered uranium material and a filtered solution, 212. The filtered uranium material and optionally, ashless filter paper which can be used in the filtration process, may be oxidized by, for example, heating in an oxidizing environment (e.g., heating the filtered uranium material in a range of 200 degrees Celsius to 500 degrees Celsius in air) to form triuranium octoxide, 214. The triuranium octoxide can be processed to form a uranium product, 216.

In various examples, the thorium bound to the ion exchange resin can be eluted utilizing an acid (e.g., <5 molar hydrochloric acid or no greater than 0.1 molar nitric acid), a solvent, or a combination thereof, to form a third solution comprising the thorium and the acid, 220. The third solution can then be processed through precipitation 110, filtration 112, oxidation 116, and processing into a product 118 as described with reference to FIG. 1 above. The inventors of the present disclosure surprisingly discovered the combination of first removing thorium utilizing the ion exchange resin, eluting the thorium from the ion exchange resin, and precipitating the thorium from the eluted solution can result in an unexpectedly enhanced purity and/or yield of products produced from the thorium precipitate.

In various examples, the second solution or third solution can be further purified utilizing a second ion exchange resin prior to the separating utilizing precipitation 110 or 210. In certain examples, the second solution and/or the third solution can be further purified using a liquid-liquid extraction with a secondary solution comprising TBP and optionally a hydrocarbon (e.g., a liquid hydrocarbon) and thereafter introducing a dilute nitric acid prior to the separating utilizing precipitation 110 or 210. The liquid hydrocarbon can be in the liquid state at standard temperature and pressure.

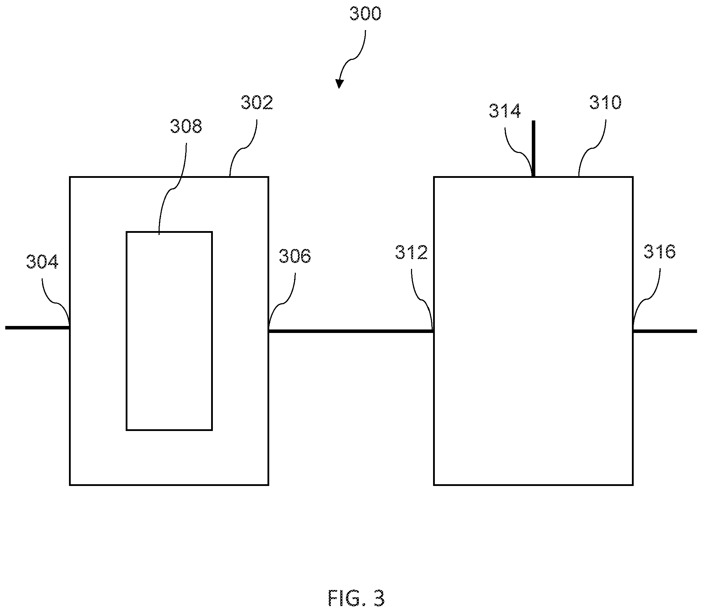

As illustrated in FIG. 3, a system 300 for separation of thorium from uranium and their decay products is provided. The system comprises an extraction vessel 302 and a separation vessel 310. The extraction vessel 302 can comprise an extraction inlet 304, an ion exchange resin 308 selective for thorium or uranium, and an extraction outlet 306. The extraction inlet 304 can be configured to receive a nuclear fuel feedstock comprising thorium and uranium and a first acid. The extraction inlet 304 can comprise a single port or multiple ports. The extraction vessel 302 can be configured to form a first solution from the nuclear fuel feedstock and the first acid. The extraction vessel 302 can contact the first solution with the ion exchange resin 308 to form a second solution. The extraction outlet 306 can be configured to transport the second solution out of the extraction vessel 302.

The separation vessel 310 can comprise separation inlets 312 and 314 and a separation outlet 316. The separation inlet 312 can be in fluid communication with the extraction outlet 306. The separation inlet 312 can be configured to receive the second solution and the separation inlet 314 can be configured to receive oxalic acid. The separation vessel 302 can be configured to combine the second solution and oxalic acid in order to precipitate the uranium or thorium in the second solution to form a precipitate. The separation outlet 316 can be configured to transport the precipitate and/or second solution out of the separation vessel 310.

In various examples, the separation outlet 316 can be in fluid communication with a filtration system. The filtration system can be configured to recycle a filtered solution to the extraction vessel 302 via a recycle line. In certain other examples, the system 300 can comprise a furnace to oxidize the precipitate separated in the filtration system. In some examples, the system 300 can comprise other processing equipment.

Those skilled in the art will recognize that the herein described methods and systems, and the discussion accompanying them are used as examples for the sake of conceptual clarity and that various configuration modifications are contemplated. Consequently, as used herein, the specific exemplars set forth and the accompanying discussion are intended to be representative of their more general classes. In general, use of any specific exemplar is intended to be representative of its class, and the non-inclusion of specific components (e.g., operations), devices, and objects should not be taken as limiting.

Various features and characteristics are described in this specification to provide an understanding of the composition, structure, production, function, and/or operation of the invention, which includes the disclosed methods and systems. It is understood that the various features and characteristics of the invention described in this specification can be combined in any suitable manner, regardless of whether such features and characteristics are expressly described in combination in this specification. The Inventors and the Applicant expressly intend such combinations of features and characteristics to be included within the scope of the invention described in this specification. As such, the claims can be amended to recite, in any combination, any features and characteristics expressly or inherently described in, or otherwise expressly or inherently supported by, this specification. Furthermore, the Applicant reserves the right to amend the claims to affirmatively disclaim features and characteristics that may be present in the prior art, even if those features and characteristics are not expressly described in this specification. Therefore, any such amendments will not add new matter to the specification or claims and will comply with the written description, sufficiency of description, and added matter requirements.

With respect to the appended claims, those skilled in the art will appreciate that recited operations therein may generally be performed in any order. Also, although various operational flows are presented in a sequence(s), it should be understood that the various operations may be performed in other orders than those that are illustrated or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

The invention(s) described in this specification can comprise, consist of, or consist essentially of the various features and characteristics described in this specification. The terms "comprise" (and any form of comprise, such as "comprises" and "comprising"), "have" (and any form of have, such as "has" and "having"), "include" (and any form of include, such as "includes" and "including"), and "contain" (and any form of contain, such as "contains" and "containing") are open-ended linking verbs. Thus, a method or system that "comprises," "has," "includes," or "contains" a feature or features and/or characteristics possesses the feature or those features and/or characteristics but is not limited to possessing only the feature or those features and/or characteristics. Likewise, an element of a composition, coating, or process that "comprises," "has," "includes," or "contains" the feature or features and/or characteristics possesses the feature or those features and/or characteristics but is not limited to possessing only the feature or those features and/or characteristics and may possess additional features and/or characteristics.

The grammatical articles "a," "an," and "the," as used in this specification, including the claims, are intended to include "at least one" or "one or more" unless otherwise indicated. Thus, the articles are used in this specification to refer to one or more than one (i.e., to "at least one") of the grammatical objects of the article. By way of example, "a component" means one or more components and, thus, possibly more than one component is contemplated and can be employed or used in an implementation of the described compositions, coatings, and processes. Nevertheless, it is understood that use of the terms "at least one" or "one or more" in some instances, but not others, will not result in any interpretation where failure to use the terms limits objects of the grammatical articles "a," "an," and "the" to just one. Further, the use of a singular noun includes the plural, and the use of a plural noun includes the singular, unless the context of the usage requires otherwise.

In this specification, unless otherwise indicated, all numerical parameters are to be understood as being prefaced and modified in all instances by the term "about," in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described herein should at least be construed in light of the number of reported significant digits and by applying ordinary rounding techniques.

Any numerical range recited herein includes all sub-ranges subsumed within the recited range. For example, a range of "1 to 10" includes all sub-ranges between (and including) the recited minimum value of 1 and the recited maximum value of 10, that is, having a minimum value equal to or greater than 1 and a maximum value equal to or less than 10. Also, all ranges recited herein are inclusive of the end points of the recited ranges. For example, a range of "1 to 10" includes the end points 1 and 10. Any maximum numerical limitation recited in this specification is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited. All such ranges are inherently described in this specification.

Whereas particular examples of this invention have been described above for purposes of illustration, it will be evident to those skilled in the art that numerous variations of the details of the present invention may be made without departing from the invention as defined in the appended claims.

## Claims

1. A method for separation of thorium from uranium and their decay products, the method comprising:
combining (102, 104) a nuclear fuel feedstock comprising thorium and uranium with a first acid to form a first solution;
contacting (106) an ion exchange resin with the first solution and at least partially removing the uranium from the first solution by binding the uranium to the ion exchange resin thereby forming a second solution;
combining (110) the second solution with oxalic acid to precipitate thorium from the second solution to form a precipitate; and
separating (112) the precipitate from the second solution;
**characterized in that**
the first acid is hydrochloric acid,
the ion exchange resin is selective for uranium, and
the precipitate comprises thorium.

2. The method of claim 1, wherein the separating comprises filtering (114) the second solution to form a filtered thorium material and a filtered solution.

3. The method of claim 2, further comprising oxidizing (116) the filtered thorium material to form thorium dioxide.

4. The method of claim 3, further comprising processing (118) the thorium dioxide to form a thorium product.

5. The method of claim 2, further comprising:
combining (220) a second nuclear fuel feedstock comprising thorium and uranium with the filtered solution to form a third solution;
contacting the ion exchange resin with the third solution and at least partially removing the uranium from the third solution by binding the uranium to the ion exchange resin thereby forming a fourth solution;
combining the fourth solution with oxalic acid to precipitate the thorium remaining in the fourth solution to form a second precipitate; and
separating the second precipitate from the fourth solution.

6. The method of any one of the preceding claims, wherein the ion exchange resin comprises a quaternary ammonium salt or diamyl amylphosphonate.

7. The method of any one of claims 1 to 4, wherein the nuclear fuel feedstock is processed through an initial actinide separation prior to combining with the first acid.

8. The method of any one of the preceding claims, further comprising purifying the second solution utilizing a second ion exchange resin prior to the separating.

9. The method of any one of claims 1 to 4, wherein the nuclear fuel feedstock further comprises plutonium, a generated transuranic element, a fission product, a decay product, or a combination thereof.

10. The method of any one of claims 1 to 4, further comprising introducing a secondary solution comprising tributyl phosphate and a hydrocarbon to remove actinide product impurities, decay product impurities, or a combination thereof.

11. The method of claim 1, wherein the nuclear fuel feedstock is from a thorium-233U nuclear fuel cycle.

12. A system for performing the method of claim 1, the system comprising:
an extraction vessel (302) comprising an extraction inlet (304), an ion exchange
resin, which is selective for uranium, and an extraction outlet (306), the extraction inlet configured to receive a nuclear fuel feedstock comprising thorium and uranium and a first acid, wherein in use, the first acid is hydrochloric acid,
the extraction vessel (302) configured to form the first solution from the nuclear fuel feedstock and the first acid and contact the first solution with the ion exchange resin to form the second solution, the extraction outlet (306) configured to transport the second solution out of the extraction vessel (302); and
a separation vessel (310) comprising a separation inlet (312, 314) and a separation outlet (316), the separation inlet (312, 314) in fluid communication with the extraction outlet (306) and configured to receive the second solution and oxalic acid, the separation vessel (310) configured to combine the second solution and the oxalic acid in order to precipitate the thorium in the second solution to form the precipitate.

## Patentansprüche

1. Verfahren für eine Trennung von Thorium von Uran und deren Zerfallsprodukten, das Verfahren umfassend:
Kombinieren (102, 104) eines Kernbrennstoffausgangsmaterials, umfassend Thorium und Uran, mit einer ersten Säure, um eine erste Lösung auszubilden;
Inberührungbringen (106) eines Ionenaustauschharzes mit der ersten Lösung und mindestens teilweises Entfernen des Urans aus der ersten Lösung durch ein Binden des Urans an das Ionenaustauschharz, wodurch eine zweite Lösung ausgebildet wird;
Kombinieren (110) der zweiten Lösung mit Oxalsäure, um Thorium aus der zweiten Lösung auszufällen, um eine Ausfällung auszubilden; und
Trennen (112) der Ausfällung von der zweiten Lösung;
**dadurch gekennzeichnet, dass**
die erste Säure Salzsäure ist,
das Ionenaustauschharz selektiv für Uran ist und
die Ausfällung Thorium umfasst.

2. Verfahren nach Anspruch 1, wobei das Trennen ein Filtern (114) der zweiten Lösung umfasst, um ein gefiltertes Thoriummaterial und eine gefilterte Lösung auszubilden.

3. Verfahren nach Anspruch 2, ferner umfassend ein Oxidieren (116) des gefilterten Thoriummaterials, um Thoriumdioxid auszubilden.

4. Verfahren nach Anspruch 3, ferner umfassend ein Verarbeiten (118) des Thoriumdioxids, um ein Thoriumprodukt auszubilden.

5. Verfahren nach Anspruch 2, ferner umfassend:
Kombinieren (220) eines zweiten Kernbrennstoffausgangsmaterials, umfassend Thorium und Uran, mit der gefilterten Lösung, um eine dritte Lösung auszubilden;
Inberührungbringen des Ionenaustauschharzes mit der dritten Lösung und mindestens teilweises Entfernen des Urans aus der dritten Lösung durch das Binden des Urans an das Ionenaustauschharz, wodurch eine vierte Lösung ausgebildet wird;
Kombinieren der vierten Lösung mit Oxalsäure, um das Thorium auszufällen, das in der vierten Lösung verbleibt, um eine zweite Ausfällung auszubilden; und
Trennen der zweiten Ausfällung von der vierten Lösung.

6. Verfahren nach einem der vorstehenden Ansprüche, wobei das Ionenaustauschharz ein quaternäres Ammoniumsalz oder Diamylamylphosphonat umfasst.

7. Verfahren nach einem der Ansprüche 1 bis 4, wobei das Kernbrennstoffausgangsmaterial durch eine anfängliche Actinidtrennung verarbeitet wird, bevor es mit der ersten Säure kombiniert wird.

8. Verfahren nach einem der vorstehenden Ansprüche, ferner umfassend ein Reinigen der zweiten Lösung unter Verwendung eines zweiten Ionenaustauschharzes vor dem Trennen.

9. Verfahren nach einem der Ansprüche 1 bis 4, wobei das Kernbrennstoffausgangsmaterial ferner Plutonium, ein erzeugtes Transuranelement, ein Spaltprodukt, ein Zerfallsprodukt oder eine Kombination davon umfasst.

10. Verfahren nach einem der Ansprüche 1 bis 4, ferner umfassend ein Einführen einer sekundären Lösung, umfassend Tributylphosphat und einen Kohlenwasserstoff, um Actinidproduktverunreinigungen, Zerfallsproduktverunreinigungen oder eine Kombination davon zu entfernen.

11. Verfahren nach Anspruch 1, wobei das Kernbrennstoffausgangsmaterial aus einem Thorium-233U-Kernbrennstoffkreislauf stammt.

12. System zum Durchführen des Verfahrens nach Anspruch 1, das System umfassend:
ein Extraktionsgefäß (302), umfassend einen Extraktionseinlass (304), ein Ionenaustauschharz, das für Uran selektiv ist, und einen Extraktionsauslass (306), wobei der Extraktionseinlass konfiguriert ist, um ein Kernbrennstoffausgangsmaterial, umfassend Thorium und Uran, und eine erste Säure aufzunehmen, wobei in Verwendung die erste Säure Salzsäure ist, wobei das Extraktionsgefäß (302) konfiguriert ist, um die erste Lösung aus dem Kernbrennstoffausgangsmaterial und der ersten Säure auszubilden und die erste Lösung mit dem Ionenaustauschharz in Berührung zu bringen, um die zweite Lösung auszubilden, wobei der Extraktionsauslass (306) konfiguriert ist, um die zweite Lösung aus dem Extraktionsgefäß (302) heraus zu transportieren; und
ein Trenngefäß (310), umfassend einen Trenneinlass (312, 314) und einen Trennauslass (316), wobei der Trenneinlass (312, 314) in Fluidverbindung mit dem Extraktionsauslass (306) steht und konfiguriert ist, um die zweite Lösung und Oxalsäure aufzunehmen, wobei das Trenngefäß (310) konfiguriert ist, um die zweite Lösung und die Oxalsäure zu kombinieren, um das Thorium in der zweiten Lösung auszufällen, um die Ausfällung auszubilden.

## Revendications

1. Procédé de séparation du thorium de l'uranium et de leurs produits de désintégration, le procédé comprenant :
la combinaison (102, 104) d'une charge d'alimentation de combustible nucléaire comprenant du thorium et de l'uranium avec un premier acide pour former une première solution ;
la mise en contact (106) d'une résine échangeuse d'ions avec la première solution et l'élimination au moins partielle de l'uranium de la première solution en liant l'uranium à la résine échangeuse d'ions, formant ainsi une deuxième solution ;
la combinaison (110) de la deuxième solution avec de l'acide oxalique pour précipiter le thorium de la deuxième solution afin de former un précipité ; et
la séparation (112) du précipité de la deuxième solution ;
**caractérisé en ce que**
le premier acide est l'acide chlorhydrique,
la résine échangeuse d'ions est sélective pour l'uranium, et
le précipité comprend du thorium.

2. Procédé selon la revendication 1, dans lequel la séparation comprend la filtration (114) de la deuxième solution pour former un matériau de thorium filtré et une solution filtrée.

3. Procédé selon la revendication 2, comprenant en outre l'oxydation (116) du matériau de thorium filtré pour former du dioxyde de thorium.

4. Procédé selon la revendication 3, comprenant en outre le traitement (118) du dioxyde de thorium pour former un produit de thorium.

5. Procédé selon la revendication 2, comprenant en outre :
la combinaison (220) d'une seconde charge d'alimentation de combustible nucléaire comprenant du thorium et de l'uranium avec la solution filtrée pour former une troisième solution ;
la mise en contact de la résine échangeuse d'ions avec la troisième solution et l'élimination au moins partielle de l'uranium de la troisième solution en liant l'uranium à la résine échangeuse d'ions, formant ainsi une quatrième solution ;
la combinaison de la quatrième solution avec de l'acide oxalique pour précipiter le thorium restant dans la quatrième solution pour former un second précipité ; et
la séparation du second précipité de la quatrième solution.

6. Procédé selon l'une quelconque des revendications précédentes, dans lequel la résine échangeuse d'ions comprend un sel d'ammonium quaternaire ou un amylphosphonate de diamyle.

7. Procédé selon l'une quelconque des revendications 1 à 4, dans lequel la charge d'alimentation de combustible nucléaire est traitée par une séparation initiale d'actinides avant la combinaison avec le premier acide.

8. Procédé selon l'une quelconque des revendications précédentes, comprenant en outre la purification de la deuxième solution en utilisant une seconde résine échangeuse d'ions avant la séparation.

9. Procédé selon l'une quelconque des revendications 1 à 4, dans lequel la charge d'alimentation de combustible nucléaire comprend en outre du plutonium, un élément transuranien généré, un produit de fission, un produit de désintégration, ou une combinaison de ceux-ci.

10. Procédé selon l'une quelconque des revendications 1 à 4, comprenant en outre l'introduction d'une solution secondaire comprenant du phosphate de tributyle et un hydrocarbure pour éliminer des impuretés de produit actinide, des impuretés de produit de désintégration, ou une combinaison de celles-ci.

11. Procédé selon la revendication 1, dans lequel la charge d'alimentation de combustible nucléaire provient d'un cycle de combustible nucléaire au thorium-233U.

12. Système pour réaliser le procédé selon la revendication 1, le système comprenant :
une cuve d'extraction (302) comprenant une entrée d'extraction (304), une résine échangeuse d'ions, qui est sélective pour l'uranium, et une sortie d'extraction (306), l'entrée d'extraction étant conçue pour recevoir une charge d'alimentation de combustible nucléaire comprenant du thorium et de l'uranium et un premier acide, dans lequel, lors de l'utilisation, le premier acide est l'acide chlorhydrique, la cuve d'extraction (302) étant conçue pour former la première solution à partir de la charge d'alimentation de combustible nucléaire et du premier acide et mettre en contact la première solution avec la résine échangeuse d'ions pour former la deuxième solution, la sortie d'extraction (306) étant conçue pour transporter la deuxième solution hors de la cuve d'extraction (302) ; et
une cuve de séparation (310) comprenant une entrée de séparation (312, 314) et une sortie de séparation (316), l'entrée de séparation (312, 314) étant en communication fluidique avec la sortie d'extraction (306) et conçue pour recevoir la deuxième solution et de l'acide oxalique, la cuve de séparation (310) étant conçue pour combiner la deuxième solution et l'acide oxalique afin de précipiter le thorium dans la deuxième solution pour former le précipité.
